(19) Europäisches Patentamt
European Patent Office
Office européen des brevets

(11)  **EP 2 812 458 B1**

(12)  **EUROPÄISCHE PATENTSCHRIFT**

(45) Veröffentlichungstag und Bekanntmachung des Hinweises auf die Patenterteilung:
**29.06.2016   Patentblatt 2016/26**

(21) Anmeldenummer: **12810177.1**

(22) Anmeldetag: **13.12.2012**

(51) Int Cl.:
*C22C 38/40* (2006.01)    *C23C 2/02* (2006.01)

(86) Internationale Anmeldenummer:
**PCT/EP2012/075402**

(87) Internationale Veröffentlichungsnummer:
**WO 2013/117273 (15.08.2013 Gazette 2013/33)**

(54) **VERFAHREN ZUM SCHMELZTAUCHBESCHICHTEN EINES STAHLFLACHPRODUKTS**

PROCESS FOR THE HOT DIP COATING OF A FLAT STEEL PRODUCT

PROCÉDÉ POUR LE REVÊTEMENT PAR IMMERSION À CHAUD D'UN PRODUIT PLAT EN ACIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2012   DE 102012101018**

(43) Veröffentlichungstag der Anmeldung:
**17.12.2014   Patentblatt 2014/51**

(73) Patentinhaber:
• **ThyssenKrupp Steel Europe AG**
  **47166 Duisburg (DE)**
• **Outokumpu Nirosta GmbH**
  **47807 Krefeld (DE)**

(72) Erfinder:
• **BLUMENAU, Marc**
  **44287 Dortmund (DE)**
• **GUSEK, Christopher**
  **58644 Iserlohn (DE)**
• **JINDRA, Fred**
  **57368 Lennestadt (DE)**
• **SCHÖNENBERG, Rudolf**
  **58675 Hemer (DE)**
• **KRAUTSCHICK, Hans-Joachim**
  **42657 Solingen (DE)**

(74) Vertreter: **Cohausz & Florack**
  **Patent- & Rechtsanwälte**
  **Partnerschaftsgesellschaft mbB**
  **Bleichstraße 14**
  **40211 Düsseldorf (DE)**

(56) Entgegenhaltungen:
EP-A1- 1 936 000        WO-A1-2005/017214
WO-A1-2012/028465       US-A1- 2004 033 386

## Beschreibung

Die Erfindung betrifft ein Verfahren zum Schmelztauchbeschichten eines Stahlflachprodukts mit einer metallischen Schutzschicht, wobei der Stahl, aus dem das Stahlflachprodukt erzeugt ist, mindestens 2,0 Gew.-% Ni und mindestens 5,0 Gew.-% Cr enthält.

Wenn hier von "Stahlflachprodukten" die Rede ist, so sind damit Stahlbänder oder -bleche sowie daraus gewonnene Platinen und Zuschnitte gemeint.

Ähnlich wie beispielsweise Mn oder N stabilisiert Ni in Stählen den austenitischen Gefügezustand zu tieferen Temperaturen hin. Dieser Effekt kann gezielt genutzt werden, um die mechanischen Werkstoffeigenschaften des Stahls zu verbessern. So weisen Mehrphasenstähle mit Restaustenitanteil eine besonders gute Kombination aus Festigkeit und Duktilität auf. Vollaustenitische Stahlgüten mit Ni-Gehalten > 8 Gew.-% besitzen weiterhin keinen Spröd-Duktil-Übergang, was Tieftemperaturanwendungen ermöglicht. Im Vergleich zu hoch-Mn-legierten Stahlgüten sind Ni-legierte Vollaustenite darüber hinaus deutlich unempfindlicher gegen Umweltbeanspruchungen. Insbesondere Ni-Stähle mit einem zusätzlichen Legierungsanteil an Cr zeichnen sich durch eine besonders gute chemische Beständigkeit und hohen Korrosionswiderstand aus. Die Anwesenheit von Mo im jeweiligen Stahl unterstützt diese Passivierung zusätzlich. Weitere Elemente, wie z. B. Al, Mn, Ti und Si, können je nach angestrebter Werkstofffestigkeit oder -duktilität der jeweiligen Stahllegierung zugegeben sein.

Aufgrund ihrer besonderen Werkstoffeigenschaften besteht ein großes Einsatzpotential für Ni-legierte Stahlflachprodukte im Bereich der Hoch- und Tieftemperaturanwendungen. Hierzu zählen unter anderem der Fahrzeugbau, dort insbesondere die Strukturbauteile im Bereich des Fahrwerks, der chemische Apparatebau, der Maschinen- und der Anlagenbau. Des Weiteren lassen sich mit Ni-legierten Stählen beispielsweise dekorative Elemente für den Hausbau oder desgleichen herstellen.

Trotz ihrer bemerkenswerten Beständigkeit gegenüber Umwelteinflüssen kann es bei Verwendung von aus nickellegierten Stählen der hier in Rede stehenden Art hergestellten Stahlflachprodukten für besonders beanspruchte Komponenten oder Bauteile technisch erforderlich oder wirtschaftlich sinnvoll sein, eine zusätzliche Schutzbeschichtung zu applizieren. So kann neben einer Optimierung der Beständigkeit, insbesondere des Korrosionswiderstands, auch die Umformeignung oder die optische Anmutung des jeweiligen Stahlflachprodukts verbessert werden.

Für die Applizierung einer solchen metallischen Schutzschicht auf ein Stahlflachprodukt stellt die kontinuierliche Bandbeschichtung ein allgemein etabliertes Verfahren dar. Jedoch verschlechtert hierbei die chemische Passivität von externen, auf der jeweiligen Oberfläche des zu beschichtenden Produkts haftenden Oxiden der Legierungselemente das Beschichtungsergebnis. Zu den in dieser Hinsicht kritischen Legierungsbestandteilen zählen beispielsweise Cr, Al, Mn, Si und andere oxidbildende Elemente. Die aus diesen Legierungselementen an der Oberfläche des zu beschichtenden Stahlflachprodukts gebildeten Oxide verursachen Benetzungs- und Haftungsfehler. Zur Vermeidung dieser Fehler müssen besondere Anforderungen von der für die kontinuierliche Bandbeschichtung jeweils zur Verfügung stehenden Verfahrens- und Anlagentechnik erfüllt werden.

Aus der AT 392 089 B ist bekannt, dass sich rostfreie Stähle im kontinuierlichen Bandprozess ein- und beidseitig elektrolytisch verzinken lassen. Dieses Verfahren ist jedoch vergleichbar kostenaufwändig und hat sich daher in der Praxis nicht durchgesetzt.

Als kostengünstigere Alternative zur elektrolytischen Beschichtung bietet sich das kontinuierliche Schmelztauchveredeln von Stahlbändern an. Bei diesem Verfahren wird ein Stahlband, nachdem es in einem Durchlaufofen rekristallisierend geglüht worden ist, kurzzeitig in ein metallisches Schmelzbad eingetaucht, das typischerweise auf Zink, Aluminium oder deren Legierungen basiert.

Die Schmelztauchveredelung legierter Stähle verlangt besondere Sorgfalt, da bei diesen Stählen während der Glühphase sauerstoffaffine Legierungsbestandteile selektiv an der Stahloberfläche oxidieren können. Erfolgt die selektive Oxidation extern muss mit Benetzungsstörungen und Haftungsmängeln gerechnet werden.

Um diese Probleme zu vermeiden, wird für Stahlflachprodukte, die durch Schmelztauchbeschichten mit einem metallischen Schutzüberzug versehen werden sollen, üblicherweise verlangt, dass ihre Legierungsgehalte auf bestimmte Maximalwerte begrenzt sind. Dies schließt den Ni-Gehalt des jeweiligen Stahlsubstrats ein. So wird der Ni-Gehalt von durch Schmelztauchbeschichten mit einer metallischen Schutzschicht zu versehenden Stahlflachprodukten in der Praxis auf weniger als 2,0 Gew.-%, insbesondere bis zu 1,0 Gew.-%, beschränkt. Beispiele hierzu finden sich in der EP 2 009 128 A1, der EP 1 612 288 A1 und der EP 2 177 641 A1.

Einen davon abweichenden Sonderfall stellt die Schmelztauchveredelung von nickellegierten Stählen dar, die neben Ni auch noch Cr in Gehalten von 5 - 30 Gew.-% aufweisen. Für solche Cr-legierten Stahlgüten wird z. B. versucht, die externe Oxidbildung durch eine Wärmebehandlung mit stark reduktiven Glühparametern (so genanntes Blankglühen) zu unterdrücken. Auf diesem Gedanken basierende Verfahren sind der US 4,675,214, der US 5,066,549, der US 4,883,723, der US 5,023,113 und der EP 0 467 749 B1 beschrieben.

Alternativ zu diesen bekannten Verfahren wird in der JP 3 111 546 A und der JP 5 311 380 A jeweils vorgeschlagen, während des Aufheizens gezielt eine FeO-Schicht zu bilden ("Voroxidation") und diese Schicht bei einer anschließend durchlaufenen Haltephase zu metallischem Eisen (Fe) zu reduzieren.

Des Weiteren wird beim aus der US 5,591,531 bekannten Verfahren eine Fe-reiche Randzone des jeweils zu beschichtenden Stahlflachprodukts mittels einer Haubenglühung in einem off-line erfolgenden Arbeitsschritt vorkonditioniert. Anschließend wird das Stahlflachprodukt in eine Schmelztauchbeschichtungsanlage eingeleitet und beschichtet.

Als andere Möglichkeit nennt die EP 2 184 376 A1 eine off-line erfolgende Vorbeschichtung, bei der auf die Stahlbandoberfläche eine dünne Fe-Schicht aufgetragen wird ("Fe-Flash").

Die voranstehend gewürdigten Verfahren zur Schmelztauchveredelung Cr-legierter Stähle setzen voraus, dass die Schmelztauchbeschichtung als Feueraluminierung ausgeführt wird, beschäftigen sich in der Regel jedoch nicht mit dem Auftrag einer auf Zink basierenden Schutzschicht. Dabei steht der praktischen Anwendung der voranstehend erläuterten Verfahrensansätze für eine Schmelztauchbeschichtung von Ni-/Cr-legierten Stählen im betrieblichen Alltag das Problem entgegen, dass sie sich an einer konventionell konzipierten Schmelztauchbeschichtungsanlage, welche für in üblicherweise legierte Stähle vorgesehen ist, nur mit großem Aufwand realisieren lassen. Hinzu kommen hohe Verbrauchs- und Wartungskosten, die durch den mit der Anwendung der bekannten Verfahren einhergehenden hohen $H_2$-Verbrauch und die bei den bekannten Verfahren erforderlichen hohen Glühtemperaturen verursacht werden. Die hohen Verbräuche und Betriebskosten stehen nicht im Einklang mit den Anforderungen, die heute an die ökonomische und ökologische Verträglichkeit solcher Verfahren gestellt werden. Insbesondere zeigt die betriebliche Erprobung, dass eine Voroxidation nach Art der in der JP 3-111546 A und JP 5-311380 A jeweils beschriebenen Vorgehensweise in der Praxis schwer beherrschbar ist und eine geringe Prozesssicherheit bietet. Sowohl im Fall, dass im Zuge der Voroxidation eine zu mächtige Oxidschicht gebildet wird, als auch dann, wenn die Schichtdicke zu gering ist, können unmittelbar Benetzungsstörungen auftreten, die eine schlechte Haftung der Schmelztauchbeschichtung auf dem jeweiligen Stahlsubstrat verursachen.

Grundsätzlich beziehen sich die voranstehend dargestellten bekannten Vorschläge für die Schmelztauchveredelung von Cr-legierten Stählen nur auf ferritsche Edelstähle. Der Ni-Gehalt der betreffenden Stahllegierungen ist folglich, soweit überhaupt ein Ni-Gehalt vorgesehen ist, auf eine vergleichsweise niedrige Obergrenze von < 3,0 Gew.-% limitiert. Dabei ist aus dem Stand der Technik bekannt, dass die Anwesenheit von Ni auf einem durch Schmelztauchen zu beschichtenden Stahlflachprodukt durchaus vorteilhaft sein kann. So kann durch eine Vorbeschichtung der Stahlbandoberfläche mit einer vor dem Einsatz des Stahlbands in eine Schmelztauchveredelungsanlage dünn aufgetragenen Ni-Schicht ("Ni-Flash") die selektive Oxidation sauerstoffaffiner Legierungselemente des Stahlflachprodukts effektiv unterdrückt und das Beschichtungsergebnis nachhaltig verbessert werden. Der Einsatz eines Ni-Flashs für die Schmelztauchveredelung wird z. B. in der JP 61-147865 A oder der JP 60-262950 A empfohlen. Da der Auftrag eines Ni-Flashs jedoch einen zusätzlichen Arbeitsschritt bedingt, der erhebliche Zusatzkosten verursacht, hat sich dieses Vorgehen in der Praxis nicht durchgesetzt.

Neben dem gesonderten Auftrag eines Ni-Flashs kann der Ni-Gehalt der Stahllegierung selbst dazu genutzt werden, die Qualität eines metallischen Schmelztauchüberzugs zu verbessern. So wird gemäß der US 7,736,449 B2 dem Stahl des jeweils zu beschichtenden Stahlflachprodukts ein Ni-Gehalt von bis zu 2,0 Gew.-% Ni zulegiert, um die Entstehung von Mn-, Al- und Si-Oxiden auf der Oberfläche des Stahlflachprodukts zu hemmen. Dabei wird der jeweils einzustellende Ni-Anteil über verschiedene komplexe, formelmäßig beschriebene Zusammenhänge sowohl mit den Gehalten an den anderen Legierungselementen des Stahlflachprodukts als auch mit den Glühparametern definiert, die während des Rekristallisierens einzuhalten sind. Einen ähnlichen Ansatz verfolgt die in der WO 00/50658 A1 für das Feuerverzinken eines Stahlflachprodukts mit 0,2 - 5,0 Gew.-% Ni beschriebene Vorgehensweise. Auch bei diesem Verfahren soll an der Stahlbandoberfläche eine Randschicht erzeugt werden, in der der Ni-Gehalt in Abhängigkeit vom jeweiligen Al- und Si-Gehalt eingestellt ist. Die bei der Prozessführung zu berücksichtigenden Abhängigkeiten haben zur Folge, dass sich diese Verfahren im großindustriellen Maßstab nicht mit der erforderlichen Betriebssicherheit und Reproduzierbarkeit realisieren lassen. Verfahren zum Schmelztauchbeschichten eines Stahlflachprodukts sind auch in EP 1936000 A1, US2004/0033386 A1, WO2005/017214 und WO2012/028465 A1 beschrieben.

Vor diesem Hintergrund bestand die Aufgabe der Erfindung darin, ein Verfahren anzugeben, welches die Schmelztauchveredelung Ni-legierter Stahlflachprodukte kosten- und ressourceneffektiv ermöglicht und dabei prozessstabil in der industriellen Praxis einsetzbar ist.

Erfindungsgemäß ist diese Aufgabe durch das in Anspruch 1 angegebene Verfahren gelöst worden.

Das erfindungsgemäße Verfahren ist für die Schmelztauchbeschichtung von kalt- oder warmgewalzten Stahlflachprodukten geeignet, die in einer großindustriellen Feuerbeschichtungsanlage unter kontrollierten Atmosphärenbedingungen im kontinuierlichen Betrieb geglüht und unmittelbar anschließend in-line schmelztauchveredelt werden. Dabei erfordert die erfindungsgemäße Vorgehensweise keinerlei Flash-Vorbeschichtungen oder desgleichen.

Hierzu umfasst das erfindungsgemäße Verfahren prinzipiell die folgenden Prozessschritte, welche nacheinander in-line durchlaufen werden:

a) Bereitstellen eines Stahlflachprodukts,

b) Aufheizen des Stahlflachprodukts auf eine Haltetemperatur,

c) Halten und Rekristallisieren des Stahlflachprodukts bei der Haltetemperatur,

d) Abkühlen des Stahlflachprodukts auf eine Bandeintrittstemperatur
und

e) Durchleiten des Stahlflachprodukts durch eine Rüsselzone in ein Schmelzenbad.

Die Aufzählung der im Zuge des erfindungsgemäßen Verfahrens der in einem kontinuierlichen Durchlauf nacheinander mindestens absolvierten Prozessschritte a) - e) ist nicht abschließend. So kann zwischen den Prozessschritten a) und b) als Arbeitsschritt a') erforderlichenfalls eine Reinigung der Oberfläche des zu beschichtenden Stahlflachprodukts durchgeführt werden. Des Weiteren kann zwischen dem Abkühlen auf die jeweilige Bandeintrittstemperatur (Prozessschritt d)) und dem Eintritt in das jeweilige Schmelzenbad (Prozessschritt e)) ebenso optional als Prozessschritt d') eine Überalterungsbehandlung durchgeführt werden. Ebenso erfolgt üblicherweise nach dem Austritt des Stahlflachprodukts aus dem Schmelzenbad als Prozessschritt e') eine Einstellung der Dicke der auf dem Stahlflachprodukt dann vorhandenen metallischen Schutzschicht.

Konkret sieht das erfindungsgemäße Verfahren zum Schmelztauchbeschichten eines hohe Ni- und Cr-Gehalte aufweisenden Stahlflachprodukts mit einer metallischen Schutzschicht mindestens folgende Arbeitsschritte vor:

a) Bereitstellen eines durch Kalt- oder Warmwalzen erhaltenen Stahlflachprodukts, das aus einem Stahl erzeugt worden ist, der die in Anspruch 1, Arbeitsschritt a) angegebene Zusammensetzung aufweist,

b) Innerhalb von 1 - 30 s erfolgendes Erwärmen des Stahlflachprodukts auf eine 700 - 1100 °C betragende Haltetemperatur, wobei das Erwärmen unter einer Erwärmungsatmosphäre erfolgt, deren Taupunkt TP1 auf -15 °C bis +30 °C eingestellt ist und die neben $N_2$ und technisch unvermeidbaren Verunreinigungen jeweils optional einen oder mehrere der folgenden Bestandteile enthält (in Vol.-%): $H_2$: 1 - 50 %, CO: 0,1 - 2,0 %, $CO_2$: 5, 0 - 15, 0 %;

c) Halten des erwärmten Stahlflachprodukts bei der Haltetemperatur über eine Haltedauer von 10 - 120 s unter einer Halteatmosphäre, die aus $N_2$ und technisch unvermeidbaren Verunreinigungen sowie 1,0 - 50,0 Vol.-% $H_2$ und bis zu 1,0 Vol.-% $O_2$ besteht und deren Taupunkt TP2 auf -30 °C bis 0 °C eingestellt ist;

d) Abkühlen des Stahlflachprodukts von der Haltetemperatur auf eine 430 - 800 °C betragende Bandeintrittstemperatur;

e) Durchleiten des Stahlflachprodukts durch eine Rüsselzone, in der das Stahlflachprodukt bis zum Eintritt in das Schmelzenbad unter einer inerten oder reduzierenden Rüsselatmosphäre gehalten wird, die aus $N_2$ und technisch unvermeidbaren Verunreinigungen sowie optional 1,0 - 50,0 Vol.-% $H_2$ besteht und deren Taupunkt TP4 -80 °C bis -25 °C beträgt, und darauffolgend durch ein Schmelzenbad, in dem das Stahlflachprodukt mit dem metallischen Überzug schmelztauchbeschichtet wird;

wobei der Taupunkt TP1 der Erwärmungsatmosphäre höher ist als der Taupunkt TP2 der Halteatmosphäre und der Taupunkt TP2 höher ist als der Taupunkt TP4 der Rüsselatmosphäre. D. h. es gilt: TP1 > TP2 > TP4.

Nach dem Austritt aus dem Schmelzenbad und einer optional beispielsweise durch den Einsatz von Abstreifdüsen erfolgenden Einstellung der Dicke der auf dem aus dem Schmelzenbad austretenden Stahlflachprodukt vorhandenen metallischen Beschichtung kann das erhaltene Stahlflachprodukt in konventioneller Weise auf Raumtemperatur abgekühlt werden. An die Abkühlung können sich jeweils optional eine Nachverformung (Dressierwalzen), eine Passivierung, eine Beölung sowie ein Aufhaspeln des Stahlflachprodukts zu einem Coil anschließen. Erforderlichenfalls kann zudem vor oder nach dem Haspeln auch noch eine Wärmebehandlung durchgeführt werden, um bestimmte Eigenschaften der metallischen Beschichtung auszuprägen.

Die einzelnen in einem kontinuierlichen Ablauf aufeinander folgend absolvierten Prozessschritte des erfindungsgemäßen Verfahrens werden bevorzugt in einem an sich bekannten Durchlaufofen durchgeführt, in dem jedem Prozessschritt eine bestimmte Ofenzone zugewiesen ist.

Das bereitzustellende Stahlflachprodukt kann als walzhartes oder geglühtes Kalt- oder Warmband vorliegen. Dabei hat sich die Anwendung des erfindungsgemäßen Verfahrens insbesondere bei Verwendung von walzharten kaltgewalzten Stahlflachprodukten als Ausgangsmaterial als besonders wirtschaftlich erwiesen. Insbesondere dann, wenn ein solches kaltgewalztes, walzhartes Stahlflachprodukt verarbeitet werden soll, erweist es sich als vorteilhaft, wenn die im Zuge des Erwärmens im Arbeitsschritt a) erreichte Haltetemperatur 700 - 1100 °C, insbesondere 700 - 850 °C, beträgt, um im Zuge des Haltens eine Rekristallisation zu bewirken.

Eine optimal wirtschaftliche Betriebsweise des erfindungsgemäßen Verfahrens ergibt sich, wenn der $H_2$-Gehalt der Erwärmungsatmosphäre 1,0 - 5,0 Vol.-% beträgt.

Die Erfindung basiert auf dem Gedanken, dass die Wärmebehandlung vor dem Eintritt in das Schmelzenbad, in dem die metallische Schutzschicht auf das Stahlflachprodukt aufgetragen wird, so ausgeführt wird, dass eine nach außen dringende, so genannte "äußere" Oxidation, die sich durch Oxidbildung an der Oberfläche des Stahlflachprodukts bemerkbar macht, weitestgehend vollständig unterbunden wird. Optimaler Weise werden daher sämtliche Wärmebehandlungsschritte des erfindungsgemäßen Verfahrens unter einer reduzierenden Atmosphäre in indirekt befeuerten Öfen durchgeführt, so dass es allenfalls zu einer minimierten, optimaler Weise zu gar keiner äußeren Oxidation kommt.

Zur indirekten Erwärmung eines Stahlflachprodukts werden in der Praxis üblicherweise Öfen des RTF-Typs (RTF = Radiant Tube Furnace) eingesetzt. In diesem Ofentyp erfolgt die Erwärmung dadurch, dass die Verbrennungsgase durch im Ofenraum angeordnete Strahlrohre geleitet werden. Die Verbrennung erfolgt innerhalb der Strahlrohre. Dadurch werden die Verbrennungsgase von der Ofenatmosphäre getrennt. Der Eintrag von oxidierenden Atmosphärenbestandteilen kann in diesem Fall vermieden werden, so dass gezielt eine bis auf technisch unvermeidbare Verunreinigungen ausschließlich aus $N_2$ und einem optional gezielt zugegebenen $H_2$-Anteil bestehende Erwärmungsatmosphäre aufrechterhalten werden kann.

Soll dennoch - beispielsweise aufgrund von zur Verfügung stehender Anlagentechnik - das Erwärmen des Stahlflachprodukts im Arbeitsschritt a) in einer direkt beheizten Ofenzone durchgeführt werden, so wird in diesem Fall die Erwärmungsatmosphäre so eingestellt, dass in ihr neben $N_2$ und dem optional vorhandenen $H_2$ maximal 0,1 - 2,0 Vol.-% CO und höchstens 5,0 - 15,0 Vol.-% $CO_2$ vorhanden sind. Auf diese Weise ist die Erwärmungsatmosphäre in einer direkt befeuerten Aufheizzone derart eingestellt, dass eine externe Oxidation von Eisen oder unedleren Elementen vermieden und die Oxidbildung der unedleren Elemente möglichst ausschließlich intern stattfindet.

Ein wesentlicher Vorteil des erfindungsgemäßen Verfahrens besteht somit darin, dass auf eine gezielte Voroxidation, wie sie einige der bekannten Verfahren vorschreiben, verzichtet werden kann. Auf diese Weise ist der mit der Durchführung des erfindungsgemäßen Verfahrens verbundene regelungs- und steuerungstechnische Aufwand deutlich reduziert.

Während der auf die Erwärmung folgenden Haltephase (Prozessschritt b)) wird das erfindungsgemäß aufgeheizte Stahlflachprodukt bei der Haltetemperatur für 10 - 120 s geglüht. Die in der Haltezone herrschende Halteatmosphäre, die Haltedauer, die Haltetemperatur und der Taupunkt TP2 der Halteatmosphäre sind dabei so aufeinander,abgestimmt, dass am Ende der Haltephase das Gefüge des Stahlflachprodukts rekristallisiert ist sowie möglicherweise vorhandene äußere Oxide jeglicher Art reduziert und die Neubildung von solchen Oxiden vermieden werden. Optimale Arbeitsergebnisse ergeben sich dabei dann, wenn auch der $H_2$-Gehalt der Halteatmosphäre 1,0-5,0 Vol.-% beträgt. Um das Oxidationspotenzial der Halteatmosphäre weiter zu minimieren, kann gleichzeitig der $O_2$-Gehalt der Halteatmosphäre auf maximal 0,1 Vol.-% beschränkt werden.

Konkret wird der Taupunkt TP2 der Halteatmosphäre so eingestellt, dass eine äußere Oxidation des Stahlflachprodukts während des Haltens bei der Haltetemperatur vermieden wird. Hierzu ist erfindungsgemäß der Taupunkt TP2 auf mindestens -30 °C, insbesondere höher als -30 °C, einzustellen. Bei niedrigeren Taupunkten besteht die Gefahr, dass unedle Legierungselemente, wie z. B. Cr, Mn oder Si, externe Oxide bilden. Gleichzeitig soll der Taupunkt TP2 erfindungsgemäß höchstens 0 °C betragen, um ein ausreichendes Reduktionspotential gegenüber eventuell an der Oberfläche des Stahlflachprodukts vorhandenen Eisen- oder Nickeloxiden zu erzielen bzw. um deren Entstehen zu vermeiden. Besonders sicher lässt sich die erfindungsgemäß ungewollte Entstehung von Fe- oder Ni-Oxiden an der Oberfläche des Stahlflachprodukts dadurch verhindern, dass der Taupunkt TP2 der Haltezonenatmosphäre kleiner oder gleich -10 °C eingestellt wird.

Nach dem Halten wird die Temperatur des Stahlbands innerhalb einer Kühlzone von der Haltetemperatur auf eine Bandeintrittstemperatur, mit der das Stahlflachprodukt in das jeweilige Schmelzenbad eintaucht, abgekühlt, die im Bereich von 430 - 800 °C liegt. Die jeweils konkret gewählte Bandeintrittstemperatur hängt dabei genauso wie die Temperatur des Schmelzenbads, durch das das Stahlflachprodukt zum Auftragen der metallischen Schutzschicht geleitet wird, davon ab, ob die Beschichtung auf Zink oder Aluminium basierend zusammengesetzt ist.

In Tabelle 1 sind für Überzüge auf Zn- (z. B. Zn-, ZnAl-, ZnMg- oder ZnMgAl-Überzüge) und Al-Basis (z. B. AlZn-, AlSi-Überzüge) typische Bereiche für die Bandeintrittstemperatur, mit der das Stahlflachprodukt in das jeweilige Schmelzenbad eintaucht, sowie der passende Bereich der Temperatur des jeweiligen Schmelzenbades angegeben.

Tabelle 1

| Schmelzbad | Bandeintauchtemperatur | Schmelzbadtemperatur |
|---|---|---|
| Zn-Basis | 430 - 650 °C | 420 - 600 °C |
| Al-Basis | 650 - 800 °C | 650 - 780 °C |

Optional kann das Stahlflachprodukt im Anschluss an die Abkühlung auf die Bandeintrittstemperatur (Prozessschritt d)) als Prozessschritt d') eine Überalterungsbehandlung durchlaufen, bei der das Stahlflachprodukt für 1 - 30 s unter einer Überalterungsatmosphäre auf der Bandeintrittstemperatur gehalten wird, wobei die Überalterungsatmosphäre neben $N_2$ und technisch unvermeidbaren Verunreinigungen optional 1 - 50 Vol.-% $H_2$, insbesondere 1 - 5 Vol.-% $H_2$, enthält und wobei der Taupunkt TP3 der Überalterungsatmosphäre auf -50 °C bis -25 °C eingestellt ist.

Nach dem Abkühlen und der optional durchgeführten Überalterungsbehandlung wird das Stahlflachprodukt in das jeweilige in einem Schmelzenbadkessel bereitgehaltene Schmelzenbad geleitet. Um auch dabei jeden Kontakt mit der Umgebungsatmosphäre zu vermeiden, wird das erfindungsgemäß wärmebehandelte Stahlflachprodukt mit der Bandeintrittstemperatur durch eine in den Schmelzenbadkessel hineinreichende Rüsselkonstruktion ins Schmelzenbad geleitet. In dieser Rüsselzone herrscht dabei eine inerte oder reduzierende Rüsselatmosphäre. Die Rüsselatmosphäre besteht dazu aus $N_2$ und technisch unvermeidbaren Verunreinigungen sowie optional 1,0 - 50,0 Vol.-% $H_2$, wobei der Taupunkt TP4 der derart zusammengesetzten Rüsselatmosphäre -80 °C bis -25 °C beträgt.

Allgemein kann gesagt werden, dass die erfindungsgemäß durchgeführte Abkühlung des Stahlflachprodukts auf die jeweilige Bandeintrittstemperatur unter einer inerten oder reduzierenden Atmosphäre erfolgt. Konkret wird dazu die Abkühlung unter der im jeweils auf die Abkühlung folgenden Arbeitsschritt herrschenden Atmosphäre durchgeführt. Dies ist im Fall, dass keine Überalterungsbehandlung durchgeführt wird, dass also das Stahlflachprodukt unmittelbar nach der Abkühlung in die Rüsselzone und von dort in das Schmelzenbad gelangt, die Rüsselatmosphäre. Dagegen erfolgt die Abkühlung im Fall, dass das Stahlflachprodukt nach der Abkühlung einer Überalterungsbehandlung unterzogen wird, unter der Überalterungsatmosphäre.

Das in einen geeigneten Schmelzenbadkessel an sich bekannter Art eingefüllte Schmelzenbad wird anschließend von dem in erfindungsgemäßer Weise vorbereiteten Stahlflachprodukt im kontinuierlichen Durchlauf passiert, wobei sich in der Praxis eine Eintauchdauer von 1 - 10 s, insbesondere 2 - 5 s, bewährt hat. Im Schmelzenbadkessel benetzt das Schmelzenbad die Stahloberfläche, und es erfolgt eine chemische Reaktion zwischen dem metallischen Eisen des Stahlbands und dem Schmelzenbad zu einer intermetallischen Grenzschicht, welche die gute Überzugshaftung gewährleistet.

Ein für die Beschichtung eines Stahlflachprodukts der erfindungsgemäß verarbeiteten Art besonders geeignetes Schmelzenbad kann (alle Angaben in Gew.-%) neben Zn und unvermeidlichen Verunreinigungen 0,1 - 60,0 %, insbesondere 0,15 - 0,25 % Al, und bis zu 0,5 % Fe aufweisen. Abhängig von ihrem jeweiligen Gehalt an Al werden die mit derart zusammengesetzten Schmelzenbädern erzeugten Beschichtungen in der Praxis als "Z-", "ZA-" oder "AZ-Überzug" bezeichnet. Zu den unvermeidbaren Verunreinigungen zählen dabei Spuren an Si, Mn, Pb sowie seltene Erden. Eine andere Schmelzenbadzusammensetzung enthält neben Zn und unvermeidbaren Verunreinigungen 0,05 - 8,0 % Al, 0,2 - 8,0 % Mg, bis zu 2,0 % Si, bis zu 0,1 % Pb, bis zu 0,2 % Ti, bis zu 1 % Ni, bis zu 1 % Cu, bis zu 0,3 % Co, bis zu 0,5 % Mn, bis zu 0,2 % Cr, bis zu 0,5 % Sr, bis zu 3,0 % Fe, bis zu 0,1 % B, bis zu 0,1 % Bi, bis zu 0,1 % Cd sowie Spuren von Seltenen Erden und anderen unvermeidbaren Verunreinigungen, wobei für das Verhältnis des Al-Gehalts %Al zum Mg-Gehalt %Mg gilt: %Al/%Mg < 1. Andere für die Beschichtung von Stahlflachprodukten der hier in Rede stehenden Art geeignete Zusammensetzungen eines Schmelzenbades sind beispielsweise in der EP 1 857 566 A1, der EP 2 055 799 A1 und der EP 1 693 477 A1 beschrieben. Die magnesiumhaltigen, auf Zink basierenden Überzüge dieser Art werden in der Praxis auch als "ZM-Überzüge" bezeichnet.

Soll das schmelztauchbeschichtete Stahlflachprodukt zur Erzeugung eines Fe-Zn-Legierungsüberzugs in-line thermisch nachbehandelt werden ("Galvannealing"), so hat sich eine Schmelzbadzusammensetzung bewährt, die neben Zn und unvermeidbaren Verunreinigungen 0,1 - 0,15 Gew.-% Al und bis zu 0,5 % Fe enthält. Der mit einem solchen Schmelzenbad erzeugte Überzug wird in der Fachsprache durch den Zusatz "ZF" bezeichnet.

Ein von Zn bis auf nicht zu vermeidende Spuren freier Überzug auf Al-Basis enthält typischerweise neben Al und unvermeidbaren Verunreinigungen bis 15,0 Gew.-% Si und bis zu 5,0 % Fe. Überzüge dieser Art werden in der Praxis als "AS-Überzüge" bezeichnet.

Indem die Einstellung der Taupunkte TP1, TP2 und TP4 der Maßgabe

$$TP1 > TP2 > TP4$$

bzw. im Fall, dass eine Überalterungsbehandlung durchgeführt wird, der Maßgabe

$$TP1 > TP2 > TP3 \geq TP4$$

folgt, ist das Oxidationspotential der jeweiligen Erwärmungsatmosphäre (Taupunkt TP1), der Halteatmosphäre (Taupunkt TP2), der optional vorhandenen Überalterungsatmosphäre (Taupunkt TP3) und der Rüsselatmosphäre (Taupunkt TP4) jeweils optimal an die während des jeweiligen Prozessschrittes vorliegende Stahlbandtemperatur angepasst. Der hohe Taupunkt TP1 der während des Aufheizens aufrechterhaltenen Erwärmungsatmosphäre bewirkt eine verstärkte Initialbildung von internen Oxiden der unedlen Legierungselemente. Beim anschließenden Halten bei der hohen Haltetemperatur gilt es, über eine Absenkung des Taupunkts TP2 das Oxidationspotential der Halteatmosphäre abzusenken, um ein optimales Reduktionsergebnis der Stahloberfläche zu erzielen und die Oxidation von Fe oder Ni zu vermeiden.

Die weitere Absenkung des Taupunkts TP3 der während der optional durchgeführten Überalterungsbehandlung aufrechterhaltenen Atmosphäre bewirkt eine weitere Verminderung des Oxidationspotentials. Auf diese Weise wird der Umstand berücksichtigt, dass aufgrund der bei der Überalterungsbehandlung herrschenden niedrigen Bandtemperatur und der kurzen Verweilzeit möglicherweise zuvor neugebildete äußere Oxide im Überalterungsschritt selbst und in den nachfolgend durchlaufenen Arbeitsschritten nicht mehr reduziert werden können. Aus demselben Grund wird der Taupunkt TP4 der im Rüssel herrschenden Rüsselatmosphäre kleiner oder gleich dem Taupunkt TP3 der Überalterungsatmosphäre und damit kleiner als der Taupunkt TP2 der Halteatmosphäre eingestellt.

Um die Bedingung TP1 > TP2 > TP3 ≥ TP4 einzuhalten, sollte bei der praktischen Umsetzung jede Kontaminierung der jeweils trockeneren Atmosphäre durch die beim jeweils vorangehenden Arbeitsschritt aufrechterhaltenen Atmosphäre vermieden werden. Dies kann auf einfache Weise dadurch realisiert werden, dass entgegen dem Bandlauf über die Länge des jeweils eingesetzten Durchlaufofens ein Druckgefälle von 20 - 100 Pa eingestellt und aufrechterhalten wird. Daraus resultiert eine stets entgegen die Förderrichtung des Stahlflachprodukts durch den Durchlaufofen gerichtete Gasströmung, durch die sich allenfalls eine jeweils trockenere Atmosphäre mit der im jeweils vorangehend durchlaufenen Prozessschritt aufrechterhaltenen Atmosphäre vermischt.

Die betreffende, entgegen der Förderrichtung des Stahlflachprodukts durch den Durchlaufofen gerichtete Gasströmung kann beispielsweise durch Regelung des jeweils eingespeisten Gasvolumenstroms, der Strömungsgeschwindigkeit und des Druckgefälles geregelt werden. Strömungsgeschwindigkeit und Druckgefälle lassen sich dabei dadurch manipulieren, dass die Absaugleistungen der Abgasabführung, welche typischerweise am Ofenanfang positioniert ist, den jeweiligen Erfordernissen angepasst werden. Lokal kann die Strömungsgeschwindigkeit des Weiteren beispielsweise durch den Einbau von Engstellen im Ofeninnenraum erhöht werden.

Die für das erfindungsgemäße Verfahren wichtige Kontrolle und Einstellung der Taupunkte TP1 - TP4 können insbesondere bei der Regelung des Taupunkts TP1 und TP2 jeweils eine gezielte Befeuchtung der Erwärmungsatmosphäre und der Halteatmosphäre notwendig machen. Hierzu kann in die jeweilige Atmosphäre (Erwärmungsatmosphäre, Halteatmosphäre, Rüsselatmosphäre oder Überalterungsatmosphäre) jeweils ein feuchtes Mediums eingeleitet werden. Dies erfolgt im Allgemeinen durch die Zugabe eines oxidativen Mediums, welches Dampf, befeuchtetes $N_2$ oder $H_2$, ein befeuchteter $N_2$-$H_2$- oder $N_2$-$O_2$-Mix oder $O_2$ sein kann. Die Zugabe erfolgt über mindestens eine Zuleitung pro zu befeuchtender Ofenzone, welche zur Vereinfachung der Regelung von der Schutzgaszuleitung separiert ist.

Ein erfindungsgemäß schmelztauchbeschichtetes Stahlflachprodukt eignet sich aufgrund seiner mechanischen Werte und Oberflächeneigenschaften hervorragend für eine ein- oder mehrstufige Kalt- oder Warmumformung zu einem Blechbauteil. So lassen sich insbesondere Bauteile für automobile Fahrzeugstrukturen sowie für Hoch- und Tieftemperaturanwendungen im Apparate-, Maschinen- oder Hausgerätebau aus erfindungsgemäß beschaffenen Stahlflachprodukten herstellen. Erfindungsgemäß erzeugte Stahlflachprodukte weisen dabei ein gutes Umformvermögen und einen hohen Widerstand gegenüber thermischen und korrosiven Umweltbelastungen auf. Die Anwendung eines erfindungsgemäß schmelztauchveredelten Stahlflachprodukts erlaubt es somit nicht nur, Leichtbaupotenziale optimal zu nutzen, sondern verlängert auch die Lebensdauer des jeweils aus einem erfindungsgemäß erzeugten Stahlflachprodukt geformten Produkts.

Der Stahl, aus dem das erfindungsgemäß verarbeitete Stahlflachprodukt erzeugt ist, enthält neben Eisen und unvermeidbaren Verunreinigungen (in Gew.-%) Cr: 5,0 - 30,0 %, Ni: 2,0 - 30,0 %, Mn: ≤ 6,0 %, Mo: ≤ 5,0 %, Si: ≤ 2,0 %, Cu: ≤ 2,0 %, Ti: ≤ 1,0 %, Nb: ≤ 1,0 %, V: ≤ 0,5 %, N: ≤ 0, 2 %, Al: ≤ 2, 0 %, C: ≤ 0,5 %.

Nachfolgend wird die Erfindung anhand von Ausführungsbeispielen näher erläutert.

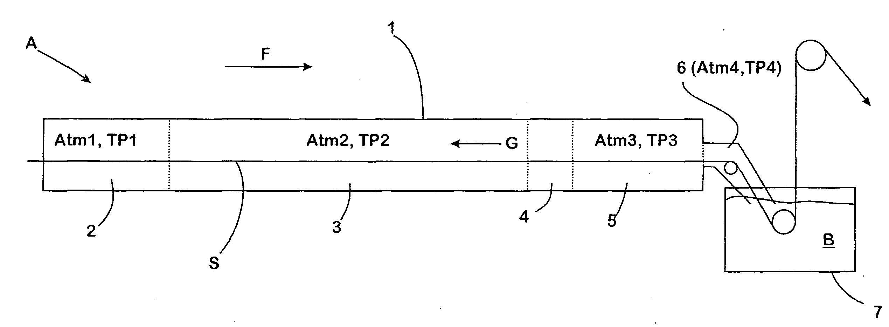

Die Figur zeigt schematisch eine Schmelztauchbeschichtungsanlage A mit einem davon umfassten Durchlaufofen 1, der zur Durchführung des erfindungsgemäßen Verfahrens angepasste Ofenzonen 2, 3, 4, 5, 6 aufweist.

Die Ofenzonen 2 - 6 werden vom jeweils zu schmelztauchbeschichtenden Stahlflachprodukt S in Förderrichtung F unterbrechungsfrei aufeinander folgend durchlaufen. Dabei tritt das Stahlflachprodukt S zunächst in die Ofenzone 2 ein, in der es innerhalb einer Erwärmungsdauer von 20 s unter einer Erwärmungsatmosphäre Atm1 auf eine Haltetemperatur T1 erwärmt wird.

Im Anschluss an die Ofenzone 2 durchläuft das Stahlflachprodukt S die Ofenzone 3, in der es über eine Haltedauer von 45 s unter einer Halteatmosphäre Atm2 auf der Haltetemperatur T1 gehalten wird.

An die Ofenzone 3 schließt sich die Ofenzone 4 an, in der das Stahlflachprodukt S innerhalb von 10 s auf eine Bandeintrittstemperatur T2 abgekühlt wird. Dabei wird die Abkühlung unter der Überalterungsatmosphäre Atm3 durchgeführt, welche in der auf die Ofenzone 4 folgenden Ofenzone 5 herrscht.

In der Ofenzone 5 wird das Stahlflachprodukt S unter der Überalterungsatmosphäre Atm3 bei der Bandeintrittstemperatur T2 über eine Dauer von 20 s einer Überalterungsbehandlung unterzogen.

Nach der Ofenzone 5 läuft das Stahlflachprodukt S in die als Rüssel ausgebildete Ofenzone 6, die mit ihrem freien Ende in einem Schmelzenbad B mündet, das in einen Schmelzenbadkessel 7 gefüllt ist. In der Ofenzone 6 wird das Stahlflachprodukt S bei der Bandeintrittstemperatur T2 unter einer Rüsselatmosphäre Atm4 gehalten.

Das über die Ofenzone 6 in das Schmelzenbad B geleitete Stahlflachprodukt wird dort in an sich bekannter Weise über eine im Schmelzenbad B sitzende Umlenkrolle umgeleitet, durchläuft dann eine hier nicht dargestellte Abstreifeinrichtung, mit der die Dicke des auf dem aus dem Schmelzenbad B austretenden Stahlflachprodukt S vorhandenen metallischen Überzugs eingestellt wird, und wird schließlich in an sich ebenfalls bekannter Weise über eine Abkühlstrecke einer hier ebenfalls nicht gezeigten Haspeleinrichtung zugeführt, in der es zu einem Coil gewickelt wird.

Bei dem in der Schmelztauchbeschichtungsanlage A mit einer metallischen Schutzbeschichtung versehenen Stahlflachprodukt S handelt es sich typischerweise um ein kaltgewalztes Stahlband im walzharten Zustand.

Für 18 Versuche V1 - V18 sind aus drei unterschiedlichen Stählen S1 - S3, deren Legierungsbestandteile in Gew.-% in Tabelle 2 angegeben sind, kaltgewalzte Stahlbänder erzeugt worden, die anschließend im walzharten Zustand in die Schmelztauchbeschichtungsanlage A eingespeist worden sind.

Tabelle 2

| Stahl | C | Ni | Cr | Mn | Mo | N |
|-------|------|------|------|-----|-----|------|
| S1 | 0,03 | 13,0 | 18,5 | 2,0 | 2,5 | - |
| S2 | 0,15 | 9,5 | 19,0 | 2,0 | 0,8 | 0,11 |
| S3 | 0,07 | 10,5 | 17,0 | 2,0 | - | - |
| Rest Fe und unvermeidbare Verunreinigungen | | | | | | |

In Tabelle 3 sind für jeden der Versuche V1 - V18 die in der Ofenzone 2 jeweils erreichte Haltetemperatur T1, die Zusammensetzung der in der Ofenzone 2 herrschenden Erwärmungsatmosphäre Atm1, der jeweils eingestellte Taupunkt TP1 der Erwärmungsatmosphäre Atm1, die Zusammensetzung der in der Ofenzone 3 herrschenden Halteatmosphäre Atm2, der jeweils eingestellte Taupunkt TP2 der Halteatmosphäre Atm2, die nach der Abkühlung in der Ofenzone 4 erreichte Bandeintrittstemperatur, die Zusammensetzung der in der Ofenzone 5 herrschenden Überalterungsatmosphäre Atm3, der Taupunkt TP3 der Überalterungsatmospähre Atm3, die Zusammensetzung der in der als Rüssel ausgebildeten Ofenzone 6 herrschenden Rüsselatmosphäre Atm4, der Taupunkt TP4 der Rüsselatmosphäre Atm4, die Temperatur T3 des Schmelzenbades B und die Zusammensetzung des Schmelzenbads B angegeben.

Durch Einstellung eines Druckgefälles zwischen den in den Ofenzonen 2 - 6 herrschenden Atmosphären Atm1 - Atm4 wird im Durchlaufenofen 1 eine entgegen der Förderrichtung F strömende Gasströmung G aufrechterhalten, durch die eine Kontamination der jeweils trockeneren Atmosphäre Atm2, Atm3, Atm4 durch die jeweils feuchtere, vom Stahlflachprodukt S zuvor durchlaufene Atmosphäre Atm1, Atm2, Atm3 verhindert wird.

In Tabelle 4 sind die Ergebnisse der Versuche V1 - V18 bewertet worden. Es zeigt sich, dass bei den nicht erfindungsgemäßen Ausführungsbeispielen 4, 5, 6, 11, 12 und 18, bei denen jeweils die Einstellung der Taupunkte TP1, TP2, TP3, TP4 nicht der erfindungsgemäßen Maßgabe TP1 > TP2 > TP3 ≥ TP4 folgte und gegebenenfalls weitere Abweichungen von den Vorgaben der Erfindung vorlagen, sowie bei den Ausführungsbeispielen 15 und 17, bei denen jeweils einer der Taupunkte TP1 oder TP2 außerhalb des erfindungsgemäßen vorgegebenen jeweiligen Bereichs lag, nur ungenügende. Beschichtungsergebnisse erzielt worden sind. Dagegen ergaben die in erfindungsgemäßer Weise durchgeführten Versuche jeweils optimale Beschichtungsergebnisse.

Tabelle 3

| Versuch | Stahl | T1 [°C] | Atm1 [Vol.-%] | TP1 [°C] | Atm2 [Vol.-%] | TP2 [°C] | T2 [°C] | Atm3 [Vol.-%] | TP3 [°C] | Atm4 [Vol.-%] | TP4 [°C] | T3 [°C] | Zusammensetzung Schmelzenbad B [Gew.-%] |
|---|---|---|---|---|---|---|---|---|---|---|---|---|---|
| 1 | S1 | 780 | $N_2$+5%$H_2$ | 0 | $N_2$+5%$H_2$ | -20 | 485 | $N_2$+5%$H_2$ | -30 | $N_2$+5%$H_2$ | -40 | 465 | Zn+0,18%Al |
| 2 | S1 | 750 | $N_2$+5%$H_2$ | +20 | $N_2$+5%$H_2$ | -20 | 485 | $N_2$+5%$H_2$ | -30 | $N_2$+5%$H_2$ | -50 | 465 | Zn+0,18%Al |
| 3 | S1 | 800 | $N_2$+5%$H_2$ | -10 | $N_2$+5%$H_2$ | -20 | 480 | $N_2$+5%$H_2$ | -30 | $N_2$+5%$H_2$ | -50 | 470 | Zn+0,12%Al |
| 4 | S1 | 650 | $N_2$+5%$H_2$ | -10 | $N_2$+5%$H_2$ | -30 | 485 | $N_2$+5%$H_2$ | -30 | $N_2$+5%$H_2$ | -30 | 465 | Zn+0,18%Al |
| 5 | S1 | 800 | $N_2$+5%$H_2$ | -20 *) | $N_2$+5%$H_2$ | -20 | 485 | $N_2$+5%$H_2$ | -20 | $N_2$+5%$H_2$ | -20 | 465 | Zn+0,18%Al |
| 6 | S1 | 800 | $N_2$+5%$H_2$ | -30 *) | $N_2$+5%$H_2$ | -30 | 490 | $N_2$+5%$H_2$ | -30 | $N_2$+5%$H_2$ | -30 | 470 | Zn+0,18%Al |
| 7 | S2 | 780 | $N_2$+5%$H_2$ | 0 | $N_2$+5 % $H_2$ | -20 | 490 | $N_2$+5%$H_2$ | -30 | $N_2$+5%$H_2$ | -40 | 460 | Zn+0,18%Al |
| 8 | S2 | 750 | $N_2$+5%$H_2$ | 0 | $N_2$+5 % $H_2$ | -20 | 490 | $N_2$+5%$H_2$ | -30 | $N_2$+5%$H_2$ | -50 | 460 | Zn+0,18%Al |
| 9 | S2 | 800 | $N_2$+5%$H_2$ | +5 | $N_2$+5 % $H_2$ | -20 | 485 | $N_2$+5%$H_2$ | -30 | $N_2$+5%$H_2$ | -50 | 460 | Zn+0,22%Al |
| 10 | S2 | 850 | $N_2$+5% $H_2$ | +10 | $N_2$+5%$H_2$ | -25 | 485 | $N_2$+5%$H_2$ | -30 | $N_2$+5%$H_2$ | -30 | 470 | Zn+0,18%Al |
| 11 | S2 | 800 | $N_2$+5%$H_2$ | -20 *) | $N_2$+5%$H_2$ | -30 | 485 | $N_2$+5%$H_2$ | -20 | $N_2$+5%$H_2$ | -20 | 465 | Zn+0,18%Al |
| 12 | S1 | 800 | $N_2$+5%$H_2$ | -30 *) | $N_2$+5%$H_2$ | -30 | 485 | $N_2$+5%$H_2$ | -30 | $N_2$+5%$H_2$ | -30 | 465 | Zn+0,18%Al |
| 13 | S3 | 780 | $N_2$+5%$H_2$ | +10 | $N_2$+5%$H_2$ | -20 | 480 | $N_2$+5%$H_2$ | -30 | $N_2^+$5%$H_2$ | -40 | 465 | Zn+0,9%Al+0,9%Mg |
| 14 | S3 | 750 | $N_2$+5%$H_2$ | 0 | $N_2$+5%$H_2$ | -20 | 690 | $N_2$+5%$H_2$ | -30 | $N_2$+5%$H_2$ | -50 | 680 | Al+11,5%Si |
| 15 | S3 | 800 | $N_2$+5%$H_2$ | -10 | $N_2$+5%$H_2$ | -45 *) | 485 | $N_2$+5%$H_2$ | -50 | $N_2$+5%$H_2$ | -50 | 465 | Zn+0,18%Al |
| 16 | S3 | 850 | $N_2$+5%$H_2$ | -10 | $N_2$+5%$H_2$ | -30 | 680 | $N_2$+5%$H_2$ | -35 | $N_2$+5%$H_2$ | -50 | 670 | Al+11,5%Si |
| 17 | S3 | 800 | $N_2$+5%$H_2$ | -20 *) | $N_2$+5%$H_2$ | -30 | 485 | $N_2$+5%$H_2$ | -40 | $N_2$+5%$H_2$ | -50 | 470 | Zn+0,18%Al |
| 18 | S3 | 800 | $N_2$+5%$H_2$ | -30 *) | $N_2$+5%$H_2$ | -30 | 485 | $N_2$+ 5% $H_2$ | -20 *) | $N_2$+5%$H_2$ | -20 *) | 470 | Zn+0,18%Al |

*) Außerhalb der erfindungsgemäßen Vorgaben

Tabelle 4

| Versuch | Ergebnis | Erfindungsgemäß |
|---------|----------|-----------------|
| 1 | Gut | Ja |
| 2 | Gut | Ja |
| 3 | Gut | Ja |
| 4 | Benetzungsstörungen | Nein |
| 5 | Benetzungsstörungen | Nein |
| 6 | Benetzungsstörungen | Nein |
| 7 | Gut | Ja |
| 8 | Gut | Ja |
| 9 | Gut | Ja |
| 10 | Gut | Ja |
| 11 | Benetzungsstörungen | Nein |
| 12 | Benetzungsstörungen | Nein |
| 13 | Gut | Ja |
| 14 | Gut | Ja |
| 15 | Benetzungsstörungen schlechte Haftung | Nein |
| 16 | Gut | Ja |
| 17 | Benetzungsstörungen | Nein |
| 18 | Benetzungsstörungen | Nein |

**BEZUGSZEICHEN**

1 Durchlaufofen
2 Ofenzone des Durchlaufofens 1 (Erwärmungszone)
3 Ofenzone des Durchlaufofens 1 (Haltezone)
4 Ofenzone des Durchlaufofens 1 (Kühlzone)
5 Ofenzone des Durchlaufofens 1 (Überalterungszone)
6 Ofenzone des Durchlaufofens 1 (Rüssel)
7 Schmelzenbadkessel

A Schmelztauchbeschichtungsanlage
B Schmelzenbad
F Förderrichtung
G Gasströmung
S Stahlflachprodukt (kaltgewalztes, walzhartes Stahlband)

**Patentansprüche**

1. Verfahren zum Schmelztauchbeschichten eines Stahlflachprodukts (S) mit einer metallischen Schutzschicht, umfassend folgende Arbeitsschritte:

a) Bereitstellen eines durch Kalt- oder Warmwalzen erhaltenen Stahlflachprodukts (S), das aus einem Stahl erzeugt worden ist, der neben Eisen und unvermeidbaren Verunreinigungen (in Gew.-%)
Cr: 5, 0 - 30,0 %,

Ni: 2,0 - 30,0 %,
Mn: ≤ 6,0 %,
Mo: ≤ 5,0 %,
Si: ≤ 2,0 %,
Cu: ≤ 2,0 %,
Ti: ≤ 1,0 %,
Nb: ≤ 1,0 %,
V: ≤ 0,5 %,
N: ≤ 0,2 %,
Al: ≤ 2,0 %,
C: ≤ 0,5 %
enthält;

b) innerhalb von 1 - 30 s erfolgendes Erwärmen des Stahlflachprodukts (S) auf eine 700 - 1100 °C betragende Haltetemperatur, wobei das Erwärmen unter einer Erwärmungsatmosphäre (Atm1) erfolgt, deren Taupunkt TP1 auf -15 °C bis +30 °C eingestellt ist und die neben $N_2$ und technisch unvermeidbaren Verunreinigungen jeweils optional einen oder mehrere der folgenden Bestandteile enthält (in Vol.-%):

$H_2$: 1 - 50 %,
CO: 0,1 - 2,0 %,
$CO_2$: 5,0 - 15,0 %;

c) Halten des erwärmten Stahlflachprodukts (S) bei der Haltetemperatur über eine Haltedauer von 10 - 120 s unter einer Halteatmosphäre (Atm2), die aus $N_2$ und technisch unvermeidbaren Verunreinigungen sowie 1,0 - 50,0 Vol.-% $H_2$ und bis zu 1,0 Vol.-% $O_2$ besteht und deren Taupunkt TP2 auf -30 °C bis 0 °C eingestellt ist;
d) Abkühlen des Stahlflachprodukts (S) von der Haltetemperatur auf eine 430 - 800 °C betragende Bandeintrittstemperatur;
e) Durchleiten des Stahlflachprodukts (S) durch eine Rüsselzone (6), in der das Stahlflachprodukt (S) bis zum Eintritt in das Schmelzenbad (B) unter einer inerten oder reduzierenden Rüsselatmosphäre (Atm4) gehalten wird, die aus $N_2$ und technisch unvermeidbaren Verunreinigungen sowie optional 1,0 - 50,0 Vol.-% $H_2$ besteht und deren Taupunkt TP4 -80 °C bis -25 °C beträgt, und darauffolgend durch ein Schmelzenbad (B), in dem das Stahlflachprodukt (S) mit dem metallischen Überzug schmelztauchbeschichtet wird;

wobei der Taupunkt TP1 der Erwärmungsatmosphäre (Atm1) höher ist als der Taupunkt TP2 der Halteatmosphäre (Atm2) und der Taupunkt TP2 höher ist als der Taupunkt TP4 der Rüsselatmosphäre (Atm4).

2. Verfahren nach Anspruch 1, **dadurch gekennzeichnet, dass** die Haltetemperatur 700 - 850 °C beträgt.

3. Verfahren nach einem der voranstehenden Ansprüche, **dadurch gekennzeichnet, dass** die Erwärmungsatmosphäre (Atm1) 1,0 - 5,0 Vol.-% $H_2$ enthält.

4. Verfahren nach einem der voranstehenden Ansprüche, **dadurch gekenntzeichnet, dass** das Erwärmen in einer direkt beheizten Ofenzone durchgeführt wird und die Erwärmungsatmosphäre (Atm1) neben $N_2$ und $H_2$, 0,1 - 2,0 Vol.-% CO sowie 5,0 - 15,0 Vol.-% $CO_2$ enthält.

5. Verfahren nach einem der voranstehenden Ansprüche, **dadurch gekennzeichnet, dass** der $H_2$-Gehalt der Halteatmosphäre (Atm2) 1,0 - 5,0 Vol.-% beträgt.

6. Verfahren nach einem der voranstehenden Ansprüche, **dadurch gekennzeichnet, dass** der Taupunkt TP2 der Halteatmosphäre (Atm2) -30 °C bis -10 °C beträgt.

7. Verfahren nach einem der voranstehenden Ansprüche, **dadurch gekennzeichnet, dass** der $O_2$-Gehalt der Halteatmosphäre (Atm2) maximal 0,1 Vol.-% beträgt.

8. Verfahren nach einem der voranstehenden Ansprüche, **dadurch gekennzeichnet, dass** das Stahlflachprodukt (S) im Anschluss an die Abkühlung auf die Bandeintrittstemperatur (Prozessschritt d)) als Prozessschritt d') eine Überalterungsbehandlung durchläuft, bei der das Stahlflachprodukt (S) für 1 - 30 s unter einer Überalterungsatmosphäre (Atm3) auf der Bandeintrittstemperatur gehalten wird, **dass** die Überalterungsatmosphäre (Atm3) neben $N_2$ und technisch unvermeidbaren Verunreinigungen optional 1-50 Vol.-% $H_2$ enthält und **dass** der Taupunkt TP3 der Überalterungsatmosphäre (Atm3) auf -50 °C bis -25 °C eingestellt ist.

9. Verfahren nach Anspruch 8, **dadurch gekennzeichnet, dass** der $H_2$-Gehalt de Überalterungsatmosphäre (Atm3) 1,0 - 5,0 Vol.-% beträgt

10. Verfahren nach einem der Ansprüche 8 oder 9,
**dadurch gekennzeichnet, dass** für die Taupunkte TP1, TP2, TP3 und TP4 folgende Bedingung gilt:

$$TP1 > TP2 > TP3 \geq TP4$$

11. Verfahren nach einem der voranstehenden Ansprüche, **dadurch gekennzeichnet, dass** das Stahlflachprodukt (S) innerhalb von 1 - 10 s durch das Schmelzenbad (B) geleitet wird.

12. Verfahren nach einem der voranstehenden Ansprüche, **dadurch gekennzeichnet, dass** die Einstellung des Taupunkts der Erwärmungsatmosphäre (Atm1), der Halteatmosphäre (Atm2), der Rüsselatmosphäre (Atm3) oder der Überalterungsatmosphäre (Atm4) jeweils optional durch Zugabe eines feuchten Mediums erfolgt.

**Claims**

1. Method for hot-dip coating of a steel flat product (S) with a metallic protective coating, comprising the following working steps:

   a) provision of a steel flat product (S) obtained by cold- or hot-rolling, which is produced from a steel, containing as well as iron and unavoidable contaminants (in wt.%):

   Cr: 5.0 - 30.0%
   Ni: 2.0 - 30.0%
   Mn: $\leq$ 6.0%
   Mo: $\leq$ 5.0%
   Si: $\leq$ 2.0%
   Cu: $\leq$ 2.0%
   Ti: $\leq$ 1.0%
   Nb: $\leq$ 1.0 %
   V: $\leq$ 0.5%
   N: $\leq$ 0.2%
   Al : $\leq$ 2.0%
   C: $\leq$ 0.5%

   b) within 1 - 30 s, heating of the steel flat product (S) to a holding temperature between 700 and 1100°C, wherein heating takes place under a heating atmosphere (Atm1) which has a dew point TP1 set to -15°C to +30°C and which contains, as well as $N_2$ and technically unavoidable contaminants, optionally one or more of the following constituents (in vol.%):

   $H_2$: 1 - 50%,
   CO: 0.1 - 2.0%,
   $CO_2$: 5.0 - 15.0%;

   c) holding of the heated steel flat product (S) at the holding temperature for a holding duration of 10 - 120 s under a holding atmosphere (Atm2) which consists of $N_2$ and technically unavoidable contaminants and 1.0 - 50.0 vol.% $H_2$ and up to 1.0 vol.% $O_2$, and the dew point TP2 of which is set to -30°C to 0°C;
   d) cooling of the steel flat product (S) from the holding temperature to a strip inlet temperature amounting to 430 - 800°C;
   e) passage of the steel flat product (S) through an inlet zone (6), in which the steel flat product is held under an inert or reducing atmosphere (Atm4), which consists of $N_2$ and technically unavoidable contaminants and optionally 1.0 - 50.0 vol.% $H_2$, and its dew point TP4 is -80°C to -25°C until entry into the melt bath (B), and subsequent passage through a melt bath (B) in which the steel flat product (S) is hot-dip coated with the metallic coating;

wherein the dew point TP1 of the heating atmosphere (Atm1) is higher than the dew point TP2 of the holding atmosphere (Atm2), and the dew point TP2 is higher than the dew point TP4 of the inlet atmosphere (Atm4).

2. Method according to claim 1, **characterised in that** holding temperature is 700 to 850°C.

3. Method according to any of the preceding claims, **characterised in that** the heating atmosphere (Atm1) contains 1.0 - 5.0 vol.% $H_2$.

4. Method according to any of the preceding claims, **characterised in that** the heating is carried out in a directly heated furnace zone and the heating atmosphere (Atm1) contains, as well as $N_2$ and $H_2$, 0.1 - 2.0 vol.% CO and 5.0 - 15.0 vol.% $CO_2$.

5. Method according to any of the preceding claims, **characterised in that** the $H_2$ content of the holding atmosphere (Atm2) is 1.0 - 5.0 vol.%.

6. Method according to any of the preceding claims, **characterised in that** the dew point TP2 of the holding atmosphere (Atm2) is -30°C to -10°C.

7. Method according to any of the preceding claims, **characterised in that** the $O_2$ content of the holding atmosphere (Atm2) is maximum 0.1 vol.%.

8. Method according to any of the preceding claims, **characterised in that** following cooling to the strip inlet temperature (process step d)), the steel flat product (S) undergoes as process step d') an overageing treatment in which the steel flat product (S) is held for 1 - 30 s under an overageing atmosphere (Atm3) at the strip inlet temperature, that the overageing atmosphere (Atm3) contains, as well as $N_2$ and technically unavoidable contaminants, optionally 1 - 50 vol.% $H_2$, and that the dew point TP3 of the overageing atmosphere (Atm3) is set at -50°C to -25°C.

9. Method according to claim 8, **characterised in that** the $H_2$ content of the overageing atmosphere (Atm3) is 1.0 - 5.0 vol.%.

10. Method according to one of claims 8 or 9, **characterised in that** for the dew points TP1, TP2, TP3 and TP4 the following condition applies:

$$TP1 > TP2 > TP3 \geq TP4.$$

11. Method according to any of the preceding claims, **characterised in that** the steel flat product (S) is conducted through the melt bath (B) within 1 - 10 s.

12. Method according to any of the preceding claims, **characterised in that** the setting of the dew point of the heating atmosphere (Atm1), the holding atmosphere (Atm2), the inlet atmosphere (Atm3) or the overageing atmosphere (Atm4), in each case takes place optionally by the addition of a damp medium.

**Revendications**

1. Procédé pour le revêtement par immersion à chaud d'un produit plat en acier (S) avec une couche de protection métallique, comprenant les étapes de travail suivantes :

a) Préparation d'un produit plat en acier (S) obtenu par laminage à chaud ou à froid qui est produit à partir d'un acier constitué par, outre du fer et des impuretés inévitables, (en % en masse) :

Cr : 5,0 à 30,0 %
Ni : 2,0 à 30,0 %

Mn : ≤ 6,0 %
Mo : ≤ 5,0 %
Si : ≤ 2,0 %
Cu : ≤ 2,0 %
Ti : ≤ 1,0 %
Nb : ≤ 1,0 %
V : ≤ 0,5 %
N : ≤ 0,2 %
Al : ≤ 2,0 %
C : ≤ 0,5 % ;

b) Chauffage du produit plat en acier (S) en 1 - 30 secondes à une température de maintien de 700 - 1100 °C, auquel cas le chauffage a lieu sous une atmosphère de chauffage (Atm1), dont le point de rosée TP1 est réglé entre -15 °C et +30 °C et qui contient à chaque fois, éventuellement, outre du $N_2$ et des impuretés techniquement inévitables, un ou plusieurs des composants suivants (en % en volume) :

$H_2$ : 1 - 50 %,
CO : 0,1 - 2,0 %,
$CO_2$ : 5, 0 - 15,0 % ;

c) Maintien du produit plat en acier chauffé (S) à la température de maintien sur une durée de maintien de 10 - 120 secondes sous une atmosphère de maintien (Atm2) qui se compose de $N_2$ et d'impuretés techniquement inévitables, ainsi que de 1,0 - 50,0 % en volume de $H_2$ et jusqu'à 1,0 % en volume de $O_2$ et dont le point de rosée TP2 est réglé entre -30 °C et 0 °C ;
d) Refroidissement du produit en acier plat (S) de la température de maintien à une température d'entrée de la bande de 430 - 800 °C ;
e) Passage du produit plat en acier (S) par une zone de museau (6), dans laquelle le produit plat en acier (S) est maintenu jusqu'à l'entrée dans le bain de fusion (B) sous une atmosphère de museau (Atm4) inerte ou réductrice qui se compose de $N_2$ et d'impuretés techniquement inévitables, ainsi que de, au choix, 1,0 - 50,0 % en volume de $H_2$ et dont le point de rosée TP4 se situe entre -80 % °C et -25 °, pour ensuite passer par un bain de fusion (B), dans lequel le produit plat en acier (S) est revêtu par immersion à chaud d'un revêtement métallique ;

auquel cas le point de rosé TPI de l'atmosphère de chauffage (Atm1) est supérieur au point de rosé TP2 de l'atmosphère de maintien (Atm2) et le point de rosée TP2 est supérieur au point de rosée TP4 de l'atmosphère de museau (Atm4).

2. Procédé selon la revendication 1, **caractérisé en ce que** la température de maintien est de 700 - 850 °C.

3. Procédé selon une des revendications précédentes, **caractérisé en ce que** l'atmosphère de chauffage (Atml) contient 1,0 - 5,0 % en volume de $H_2$.

4. Procédé selon une des revendications précédentes, **caractérisé en ce que** le chauffage est effectué dans une zone de four directement chauffée et l'atmosphère de chauffage (Atml) contient outre de $N_2$ et de $H_2$, 0,1 - 2,0 % en volume de CO ainsi que 5,0 - 15,0 % en volume de $CO_2$.

5. Procédé selon une des revendications précédentes, **caractérisé en ce que** la teneur en $H_2$ de l'atmosphère de maintien (Atm2) est de 1,0 - 5,0 % en volume.

6. Procédé selon une des revendications précédentes, **caractérisé en ce que** le point de rosée TP2 de l'atmosphère de maintien (Atm2) se situe entre -30 °C et - 10 °C.

7. Procédé selon une des revendications précédentes, **caractérisé en ce que** la teneur en $O_2$ de l'atmosphère de maintien (Atm2) est au maximum de 0,1 % en volume.

8. Procédé selon une des revendications précédentes, **caractérisé en ce que** le produit plat en acier (S), à la suite du refroidissement à la température d'entrée de la bande (étape de processus d)), est soumis, lors d'une étape de processus d'), à un traitement de vieillissement, lors duquel le produit plat en acier (S) est maintenu pendant 1 - 30 secondes sous une atmosphère de vieillissement (Atm3) à la température d'entrée de la bande, et **en ce que** l'atmosphère de vieillissement (Atm3) contient, outre de $N_2$ et des impuretés techniquement inévitables, au choix, 1 - 50 % en volume de $H_2$ et que le point de rosée TP3 de l'atmosphère de vieillissement (Atm3) se situe entre -50 °C et -25 °C.

9. Procédé selon la revendication 8, **caractérisé en ce que** la teneur en $H_2$ de l'atmosphère de vieillissement (Atm3) est de 1,0 - 5,0 % en volume.

10. Procédé selon une des revendications 8 ou 9, **caractérisé en ce que** les conditions suivantes s'appliquent aux points de rosée TP1, TP2, TP3 et TP4 :

$$TP1 > TP2 > TP3 \geq TP4$$

11. Procédé selon une des revendications précédentes, **caractérisé en ce que** le produit plat en acier (S) est dirigé en 1 - 10 secondes à travers le bain de fusion (B).

12. Procédé selon une des revendications précédentes, **caractérisé en ce que** le réglage du point de rosée de l'atmosphère de chauffage (Atm1), de l'atmosphère de maintien (Atm2), de l'atmosphère de museau (Atm3) ou de l'atmosphère de vieillissement (Atm4 ) a lieu, à chaque fois, au choix, par l'addition d'un milieu humide.

EP 2 812 458 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 392089 B
- EP 2009128 A1
- EP 1612288 A1
- EP 2177641 A1
- US 4675214 A
- US 5066549 A
- US 4883723 A
- US 5023113 A
- EP 0467749 B1
- JP 3111546 A
- JP 5311380 A
- US 5591531 A
- EP 2184376 A1
- JP 61147865 A
- JP 60262950 A
- US 7736449 B2
- WO 0050658 A1
- EP 1936000 A1
- US 20040033386 A1
- WO 2005017214 A
- WO 2012028465 A1
- EP 1857566 A1
- EP 2055799 A1
- EP 1693477 A1